# FASCICULE DE BREVET EUROPEEN

(11) **EP 2 297 672 B1**
(45) Date de publication et mention de la délivrance du brevet: **04.10.2017**
(21) Numéro de dépôt: 09784479.9
(22) Date de dépôt: 07.07.2009
(51) Int. Cl.: G06K 7/10

(54) **PROCEDE ET DISPOSITIF OPTIQUE POUR ANALYSER UNE MARQUE SUR UNE PAROI COURBE TRANSLUCIDE OU TRANSPARENTE**
VERFAHREN UND OPTISCHE VORRICHTUNG ZUR ANALYSE EINER MARKIERUNG AUF EINER LICHTDURCHLÄSSIGEN BZW. TRANSPARENTEN GEKRÜMMTEN WAND
METHOD AND OPTICAL DEVICE FOR ANALYZING A MARK ON A TRANSLUCENT OR TRANSPARENT CURVED WALL

(30) Priorité: 07.07.2008 FR 0854615
(43) Date de publication de la demande: 23.03.2011
(73) Titulaire: HCV 2, 69390 Vourles (FR)
(72) Inventeur: BATHELET, Guillaume, F-69280 Marcy L'Etoile (FR); LECONTE, Marc, F-69700 Loire Sur Rhone (FR)
(74) Mandataire: Thibault, Jean-Marc
(86) Numéro de dépôt international: PCT/FR2009/051344
(87) Numéro de publication internationale: WO 2010/004205

(56) Documents cités:
- US-A- 4 644 151
- US-A1- 2006 091 214

## Description

L'objet de l'invention concerne le domaine technique de la lecture d'une marque au sens général telle qu'un code, sur la surface externe d'une paroi courbe, d'un matériau translucide ou transparent.

L'objet de l'invention trouve une application particulièrement avantageuse mais non limitative dans le domaine de la lecture d'une marque, d'un signe ou d'un code apposé sur la paroi externe d'un récipient notamment en verre ou en matière plastique tel que par exemple une bouteille, un pot, une ampoule, un flacon, un verre ophtalmique, etc..

Dans le domaine de la lecture d'une marque ou d'un code sur la paroi courbe d'un article, le document US 2006/0091214 a proposé un dispositif comportant une source lumineuse éclairant un écran diffuseur percé en son centre pour le positionnement de l'objectif d'une caméra. L'axe de la caméra est colinéaire avec l'axe de l'écran diffuseur. L'écran diffuseur est équipé d'une chambre de diffusion permettant de créer une source d'éclairage fournissant des angles d'incidence multiples pour la lecture du code.

Il doit être noté que la surface de l'écran diffuseur présente en son centre une zone sans éclairage correspondant à la présence de l'objectif de la caméra. Dans le cas d'articles créant des réflexions spéculaires telles qu'une surface en verre par exemple, la caméra observe la source d'éclairage par réflexion sur la surface inspectée. La zone sans éclairage de la source provoque dans l'image une zone sombre nuisant à la lecture du code.

Par ailleurs, il est à noter que le dispositif décrit par ce document vise à lire un code réalisé sur un article opaque. Tel que cela ressort de la **Fig. 1****,** la lecture d'un code **2** sur un article transparent ou translucide présentant deux dioptres **Es** et **Ei** pose un problème spécifique. Selon cet exemple, le code **2** est réalisé sur la surface externe ou le dioptre **Es** de l'article. Il apparait ainsi une image **I** de la surface externe **Es** formée par réflexion sur la surface interne **Ei** de l'article. Cette image parasite obtenue par réflexion sur la surface interne **Ei** de l'article est décalée par rapport au code, ce qui nuit à la détection correcte du code sur la surface externe **Es** de l'article.

Dans l'état de la technique, il est également connu par le brevet US 4 644 151 un dispositif adapté pour lire un code sur un récipient correspondant au numéro du moule à partir duquel le récipient est moulé. Un tel code comporte une série de reliefs ou de perles présentant chacun un diamètre de l'ordre du mm. Le code est éclairé par une source lumineuse dont les rayons lumineux réfléchis par les reliefs sont récupérés par une caméra linéaire afin de déterminer le code inscrit sur le récipient. Un tel dispositif de lecture n'est pas adapté pour lire un code ne présentant pas ou peu de relief par rapport à la surface inspectée. Par ailleurs, un tel dispositif ne permet pas de lire de très petits motifs ou caractères dans un code, par exemple inférieur au mm. De plus, un tel dispositif ne permet pas de s'affranchir de l'image présente obtenue par réflexion sur la surface interne du récipient. Enfin, un tel dispositif nécessite un balayage à pas constant pour lire le code réalisé sur une grande largeur angulaire du récipient.

L'objet de l'invention vise donc à remédier aux inconvénients de l'état de la technique en proposant une nouvelle technique optique adaptée pour permettre d'analyser, de manière fiable, une marque comportant de petits motifs ou caractères, portés par la surface externe d'une paroi courbe réalisée dans un matériau réfléchissant et transparent voire translucide.

Pour atteindre un tel objectif, l'objet de l'invention vise à proposer un procédé pour analyser à l'aide d'une source lumineuse possédant une surface d'éclairage, et d'une caméra présentant un axe optique d'observation, une marque réalisée sur la surface externe d'une paroi courbe réalisée en un matériau translucide ou transparent.

Selon l'invention :
- on réalise la source lumineuse étendue et uniforme de manière que :
   - d'une part, l'étendue de l'image virtuelle de la surface d'éclairage de la source lumineuse recouvre complètement la surface de la marque,
   - d'autre part, la luminance de l'image virtuelle de la surface d'éclairage de la source lumineuse soit uniforme,
- et on observe la surface de la marque en superposition avec la surface de l'image virtuelle, de manière à permettre l'analyse de la marque.

Selon une variante de réalisation, le procédé consiste à observer la surface de la marque en faisant l'acquisition d'une image ou d'une série d'images prises lors d'un déplacement relatif entre la caméra et la paroi.

Avantageusement, le procédé consiste à adapter l'étendue de l'image virtuelle de la surface d'éclairage de la source lumineuse à la courbure de la paroi courbe.

Un autre objet de l'invention est de proposer un dispositif pour analyser une marque réalisée sur la surface externe d'une paroi courbe réalisée en un matériau translucide ou transparent, le dispositif comportant :
- une source lumineuse possédant une surface d'éclairage,
- et une caméra munie d'un objectif dont l'axe optique d'observation est sensiblement perpendiculaire à la surface externe de la paroi courbe,

Selon l'invention :
- la source lumineuse possède une surface d'éclairage uniforme et étendue telle que :
   - l'étendue de l'image virtuelle de la surface d'éclairage de la source lumineuse recouvre complètement la surface de la marque,
   - la luminance de l'image virtuelle de la surface d'éclairage de la source lumineuse est uniforme,
- et la caméra est adaptée pour acquérir l'image de la surface de la marque, en superposition avec la surface de l'image virtuelle.

Selon une variante de réalisation, la source lumineuse comporte un écran diffuseur rétro-éclairé qui se trouve décalé, par rapport à l'objectif de la caméra.

Selon un exemple de réalisation, un élément optique de déviation est placé devant l'objectif de la caméra.

Selon une variante de réalisation, l'écran diffuseur est prolongé, de part et d'autre, par des miroirs positionnés en vis-à-vis l'un de l'autre.

Selon une autre variante de réalisation, l'écran diffuseur est prolongé par un miroir s'étendant dans un plan sensiblement perpendiculaire aux plans d'extension des miroirs et de l'écran diffuseur.

Selon un autre exemple de réalisation, le dispositif comprend entre l'écran diffuseur et la paroi courbe, un élément optique adapté pour former l'image du plan de la surface de la source dans le plan de la pupille de l'objectif de la caméra.

Selon un autre exemple de réalisation, le dispositif comporte un élément optique semi-transparent intercalé entre l'objectif de la caméra et la paroi courbe, un écran diffuseur étant positionné de façon symétrique de la pupille d'entrée de l'objectif de la caméra, par rapport au plan de l'élément optique semi-transparent.

Avantageusement, la marque est un marquage obtenu par laser.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est un schéma explicitant le problème des images parasites que l'objet de l'invention permet de résoudre.
La **Figure 2** est une vue en coupe élévation montrant le principe de fonctionnement d'un dispositif d'analyse conforme à l'invention.
La **Figure 3** est une vue de dessus prise sensiblement selon la ligne III-III de la **Fig. 2****.**
Les **Figures 4** et **5** sont des vues respectivement de dessus et en élévation d'une autre variante de réalisation d'un dispositif d'analyse mettant en oeuvre un prisme.
Les **Figures 6** et **7** sont des vues respectivement de dessus en élévation d'un autre exemple de réalisation d'un dispositif d'analyse mettant en oeuvre une lentille de Fresnel.
La **Figure 8** est une vue en élévation d'un autre exemple de réalisation d'un dispositif d'analyse mettant en oeuvre une lame semi-transparente.

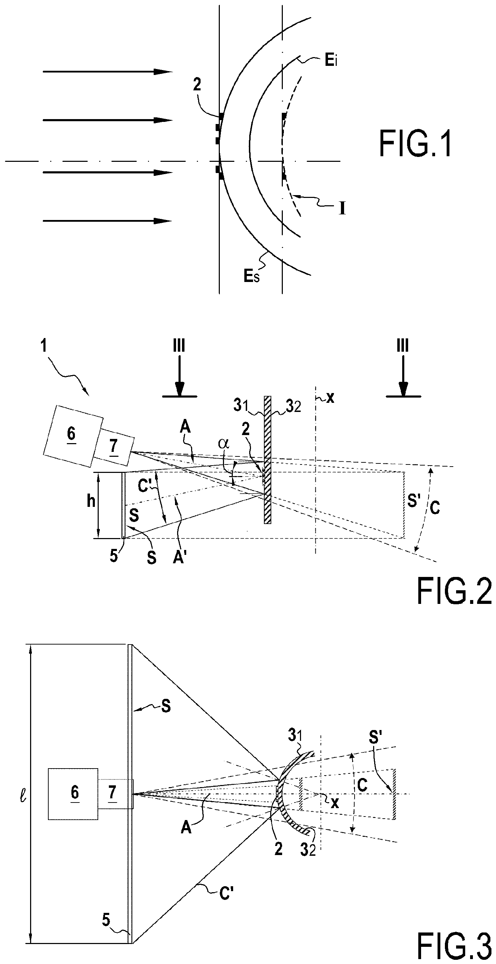

Tel que cela ressort des **Fig. 2** et **3****,** l'objet de l'invention concerne un dispositif **1** adapté pour analyser optiquement un signe, un marquage ou d'une manière générale une marque **2** de toute nature, réalisée sur la surface externe **3₁** d'une paroi courbe **3** d'un article présentant deux dioptres **3₁, 3₂** tel un verre ophtalmique ou un article creux (récipient, ampoule, tube, etc.). La marque **2** qui est réalisée intentionnellement de toute manière appropriée (par dépôt d'une encre, marquage laser, etc) peut se présenter sous différentes formes mono ou bidimensionnelle tel un code par exemple un code à barres, alphanumérique ou datamatrix.

La paroi **3** est réalisée en un matériau réfléchissant et transparent voire translucide. Par exemple, la paroi **3** est réalisée en verre ou en une matière plastique. La paroi **3** comporte deux dioptres correspondant à la surface externe **3₁** et à la surface interne **3₂** de l'article. La surface externe **3₁** s'étend sensiblement parallèlement à la surface interne **3₂** qui délimite ainsi avec la surface externe **3₁** l'épaisseur de la paroi de l'article. La surface externe **3₁** est une surface spéculaire puisqu'elle se comporte comme un miroir.

Il est à noter que le dispositif **1** selon l'invention vise à analyser la marque **2** réalisée sur une paroi **3** non plane, c'est-à-dire présentant toute forme courbe. Dans l'exemple illustré aux **Fig. 2** et **3****,** la paroi **3** présente une forme demi-cylindrique. En effet, la surface externe **3₁** présente dans un plan transversal perpendiculaire aux surfaces **3₁, 3₂,** une courbure déterminée tel un segment de cercle dans l'exemple illustré centré selon un axe longitudinal **x.** Dans l'exemple illustré, l'axe longitudinal **x** est une droite puisque la paroi **3** est une portion de cylindre, mais il peut être envisagé que la paroi **3** présente également une courbure dans le plan perpendiculaire au plan transversal de la caméra **6.**

Le dispositif **1** comporte une source lumineuse **5** et une caméra **6** munie classiquement d'un objectif **7** présentant un axe optique d'observation **A** et un champ optique d'observation **C.** Bien entendu, le champ optique d'observation **C** de la caméra **6** est adapté pour couvrir ou observer au moins toute la surface de la marque **2** réalisée sur la surface externe **3₁** de la paroi courbe classiquement, la caméra **6** est une caméra matricielle.

La source lumineuse **5** possède une surface d'éclairage **S** uniforme et étendue destinée à éclairer la surface externe **3₁** qui compte tenu de sa nature spéculaire, créée, par réflexion, une image virtuelle **S'** de la surface d'éclairage **S.** L'image virtuelle **S'** correspond ainsi à la surface de la source lumineuse **5** qui est vue par la caméra après réflexion sur la surface externe **3₁.**

Sur la **Fig. 3****,** pour des raisons de clarté, l'image **S'est** représentée à la même position que sur la **Fig. 2****.** Dans cette représentation, on néglige l'astigmatisme du miroir convexe que constitue la surface externe **3₁.** En réalité, si la surface externe **3₁** est un miroir assimilé à un miroir cylindrique d'axe **x,** et de rayon **R,** l'image virtuelle d'un segment horizontal de la surface d'éclairage **S** contenue dans le plan de coupe de la **Fig. 3****,** serait un segment **S'** horizontal situé à une distance voisine de R/2, donc plus proche de la surface externe **3₁,** tout en restant une image virtuelle du même côté de la surface externe **3₁.** Toujours en raison de l'astigmatisme, il faudrait également considérer en toute rigueur que la position **S'** de l'image virtuelle de **S** dans la **Fig. 2****,** correspond à l'image d'un segment vertical de la surface d'éclairage **S** compris dans le plan de coupe de la **Fig. 2****.**

Conformément à l'invention, la source lumineuse **5** possède une surface d'éclairage uniforme et étendue. La source lumineuse **5** est telle que :
- l'étendue de l'image virtuelle **S'** recouvre complètement la surface de la marque **2,**
- la luminance de l'image virtuelle **S'** est uniforme.

Il est à considérer que la luminance de l'image virtuelle **S'** de la source est uniforme, c'est-à-dire qu'elle ne comporte pas de zones d'ombres.

De plus, cette image virtuelle **S'** recouvre totalement la surface de la marque **2.** Ainsi, la surface de l'image virtuelle **S'** est au moins égale à la surface de la marque **2.** En pratique, et de préférence, la surface de l'image virtuelle **S'** est supérieure à la surface de la marque **2** pour être certain quel que soit les mouvements relatifs entre le dispositif **1** et l'article, que la marque **2** soit totalement recouverte par la surface de l'image virtuelle **S'.** De préférence, la surface de l'image virtuelle **S'** est au moins 1,5 fois supérieure à la surface de la marque **2.**

Il doit être compris que la caméra **6** observe l'image virtuelle **S'** de la surface **S** de la source lumineuse **5,** en arrière plan de la marque **2.** Cette marque **2** et l'image virtuelle **S'** sont contenues dans le champ d'observation **C** avec la marque **2** qui se trouve contenue dans l'image virtuelle **S'.**

Il est à noter que la source lumineuse **5** est telle que l'intensité de l'image virtuelle **S'** est suffisante pour constituer un fond ou un arrière plan qui ne soit pas perturbé par les éclairages parasites. La source lumineuse **5** est une source puisée ou continue.

Le dimensionnement de la surface **S** de la source lumineuse **5** découle directement de la description qui précède. La caméra **6** observe par son champ optique **C,** la surface de l'image virtuelle **S'** de la source lumineuse réfléchie. La prolongation **C'** du champ optique d'observation **C** permet de définir les dimensions (hauteur **h** et largeur **I**) de la surface **S** de la source lumineuse **5.** Dans l'exemple illustré, la largeur **I** de la surface **S** est prise dans le plan transversal, c'est-à-dire perpendiculaire aux surfaces **3₁, 3₂** tandis que la hauteur **h** est prise selon l'axe longitudinal **x.**

Avantageusement, la surface **S** de la source lumineuse **5** est centrée sur l'image **A'** de l'axe d'observation **A** après réflexion sur la surface externe **3₁.**

Selon une caractéristique avantageuse de l'objet de l'invention, la direction d'observation c'est-à-dire l'axe optique d'observation **A** de la caméra est sensiblement perpendiculaire à la surface externe **3₁** de la paroi. L'angle incident d'observation α est donc faible de sorte que l'image **A'** de l'axe d'observation **A** après réflexion sur la surface externe **3₁** est également sensiblement perpendiculaire à la surface externe **3₁.** L'axe optique d'observation **A** et l'image **A'** de l'axe optique d'observation **A** après réflexion sont sensiblement parallèles. Au sens de l'invention, l'axe optique d'observation **A** est sensiblement parallèle à l'image **A'** de l'axe d'observation dans la mesure où l'angle entre les deux est inférieur ou égal à 10° (α ≤ 5°) et de préférence typiquement égal à 6° (α = 3°). Dans la mesure où la direction d'observation est perpendiculaire à la surface externe **3₁,** l'image secondaire de la surface externe formée par réflexion sur la surface interne **3₂** est confondue avec l'image principale de la surface externe **3₁,** de sorte que n'apparaissent pas des images parasites correspondant au dédoublement de la marque **2.**

Tel que cela ressort de l'objet de l'invention, la caméra **6** est adaptée pour acquérir l'image de la surface de la marque **2** en superposition avec l'image virtuelle **S'** de la source. En d'autres termes, la caméra **6** est adaptée pour observer la marque **2** superposée avec l'image virtuelle **S'.** La marque **2** et l'image virtuelle **S'** sont sensiblement alignées sur l'axe d'observation **A.**

L'image acquise par la caméra **6** est traitée par une unité de traitement adaptée pour analyser ou lire la marque **2.** Compte tenu de l'éclairage et des conditions d'observations décrites ci-dessus, il n'existe pas d'images parasites dans l'image prise dans laquelle la marque **2** apparaît avec un bon contraste uniforme rendant la lecture fiable de la marque.

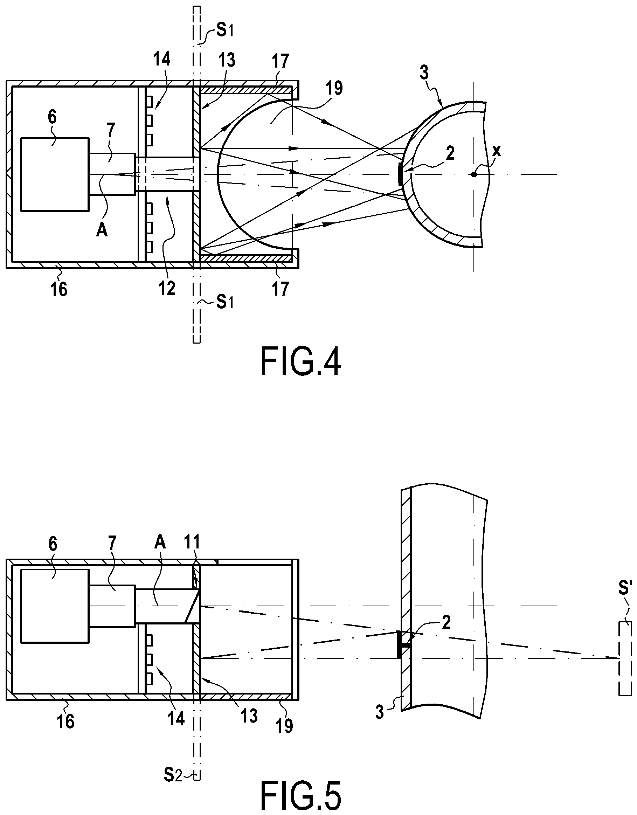

Les **Fig. 4** et **5** illustrent un premier exemple de réalisation du dispositif conforme à l'invention dans lequel un élément optique **11** tel qu'un prisme est placé devant l'objectif **7** de la caméra pour dévier l'axe optique d'observation **A** en vue de limiter l'encombrement du dispositif **1.** Par exemple, l'objectif **7** est prolongé par un tube **12** à l'extrémité duquel est monté le prisme **11.**

Dans cet exemple de réalisation, la source lumineuse **5** comporte un écran diffuseur **13** rétro-éclairé par un émetteur de lumière **14** réalisé par exemple par une série de diodes électroluminescentes. L'écran diffuseur **13** qui délimite la surface d'éclairage **S** se trouve décalé par rapport à l'objectif **7** de la caméra. En d'autres termes, l'écran diffuseur **13** se trouve séparé de la caméra **6.** Dans cet exemple illustré, l'écran diffuseur **13** est situé en dessous du prisme **11,** c'est-à-dire que l'écran diffuseur **13** est décalé, selon l'axe longitudinal **x** de l'article, par rapport à l'objectif **7.** Bien entendu, il peut être envisagé un positionnement différent entre l'écran diffuseur et le prisme en assurant un pivotement de l'ensemble de 180°, de sorte que l'écran diffuseur **13** se trouve situé au dessous du prisme **11.**

Avantageusement, la caméra **6** munie de son objectif **7** prolongé par le tube **12** est monté dans un boîtier ouvert **16** de manière que l'axe optique d'observation avant déviation par le prisme **11,** soit perpendiculaire à l'axe longitudinal **x** de l'article. L'écran diffuseur **13** est positionné en dessous du prisme **11,** avec la normale à la surface **S** qui est perpendiculaire à l'axe longitudinal **x** de l'article. En arrière de l'écran diffuseur **13,** sont montées les diodes électroluminescentes **14.**

Cet écran diffuseur **13** est prolongé de part et d'autre par des miroirs **17** positionnés pour augmenter artificiellement la surface de la source lumineuse **5** selon une direction privilégiée à savoir, dans l'exemple illustré, une direction horizontale comprise dans le plan tangent à la surface externe courbe **3₁.** La surface **S** de la source lumineuse **5** se trouve ainsi augmentée de part et d'autre, d'une surface **S₁** correspondant à l'image virtuelle de la surface **S** par réflexion sur les miroirs **17.** A titre d'exemple, les miroirs **17** s'étendent en vis à vis l'un de l'autre et parallèlement à l'axe longitudinal **x** en prolongeant l'écran diffuseur **13.** La présence des miroirs **17** permet d'augmenter artificiellement la surface de l'écran diffuseur **13** selon une direction horizontale perpendiculaire à l'axe longitudinal **x.** Ainsi pour une largeur donnée du boîtier **16,** la surface de la source lumineuse **5** est étendue dans le sens horizontale (largeur **I**) puisqu'elle correspond à la surface **S** de la source lumineuse **5** et aux deux surfaces **S₁** des miroirs **17.** La présence des miroirs permet d'augmenter l'observation selon le pourtour ou la circonférence de l'article, sans augmenter l'encombrement en largeur de la source lumineuse **5.**

L'objet de l'invention permet ainsi d'adapter l'étendue de l'image virtuelle **S'** de la surface d'éclairage **S** de la source lumineuse **5** à la courbure de la paroi courbe **3.** Ainsi, plus la courbure de la paroi **3** est grande (rayon faible), plus la largeur **I** de la surface de la source lumineuse **5** est grande.

Selon une autre variante de réalisation, il est à noter qu'il peut être prévu d'augmenter artificiellement la surface de la source lumineuse **5** selon une deuxième direction à savoir selon l'axe vertical **x.** Selon cet exemple, l'écran diffuseur **13** est prolongé par un miroir **19** s'étendant dans un plan sensiblement perpendiculaire aux plans d'extension des miroirs **17** et de l'écran diffuseur **13.** La surface de la source lumineuse **5** se trouve ainsi augmentée, dans le plan vertical, d'une surface **S₂** correspondant à l'image virtuelle de la surface **S** par réflexion sur le miroir **19.**

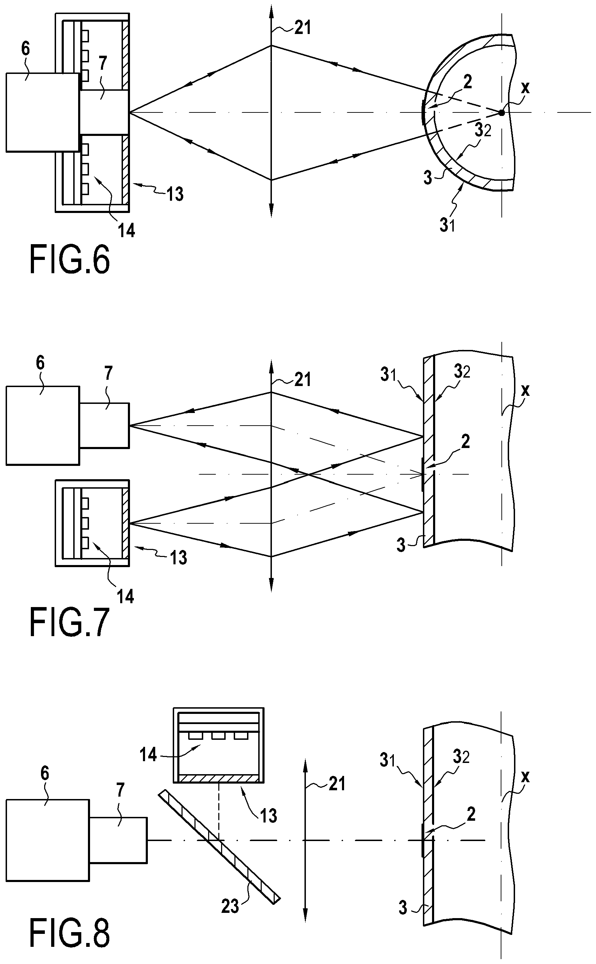

Les **Fig. 6** et **7** illustrent un autre exemple de réalisation dans lequel le dispositif d'analyse **1** comprend entre l'écran diffuseur **13** et la paroi courbe **3,** un élément optique **21** adapté pour former l'image du plan de la surface **S** de la source lumineuse **5** dans le plan de la pupille de l'objectif **7** de la caméra **6.** Cet élément optique **21,** tel qu'une lentille de Fresnel permet ainsi de conjuguer le plan de la source lumineuse **5** avec l'axe longitudinal **x** de l'article. Après réflexion sur la surface externe **3₁** de la paroi, les rayons lumineux sont conjugués par la lentille au niveau de la pupille de l'objectif **7.** Ainsi la surface **S** de la source lumineuse **5** apparaît dans l'image, uniforme et étendue dans une direction horizontale comprise dans le plan tangent à la surface externe courbe **3₁.**

Selon cet exemple, la caméra **6** munie de son objectif **7** est placée au-dessus de l'écran diffuseur **13** rétro-éclairé par les diodes électroluminescentes **14** de manière que les axes optiques d'observation et d'éclairage, avant leur passage dans la lentille de Fresnel **21** soient parallèles entre eux. Il est à noter que les axes d'observation et d'éclairage forment grâce à l'utilisation de la lentille de Fresnel **21,** un angle inférieur à 10° permettant d'éviter l'apparition des ombres portées.

La **Fig. 8** illustre un autre exemple de réalisation dans lequel les axes d'observation et d'éclairage sont colinéaires. Selon cet exemple, la surface de l'écran diffuseur **13** de la source lumineuse est observée par la caméra, après réflexion sur la surface externe **3₁** de la paroi. Afin que cette surface de l'écran diffuseur **13** après réflexion sur la paroi, apparaisse étendue dans le sens horizontal, une lentille de Fresnel **21** peut être placée, par exemple, entre l'objectif **7** et la paroi, afin de conjuguer le plan de la source lumineuse avec l'axe longitudinal **x** de l'article. Après réflexion sur la surface externe de la paroi, les rayons lumineux sont conjugués par la lentille de Fresnel **21** au niveau de la pupille de l'objectif **7.** Ainsi, la surface de l'écran diffuseur **13** apparaît dans l'image, uniforme et étendue dans une direction horizontale comprise dans le plan tangent à la surface externe courbe **3₁.**

Il est à noter que l'axe optique d'observation **A** est perpendiculaire à l'axe longitudinal **x** de l'article. Afin que les axes optiques d'observation et d'éclairage soient colinéaires, un élément optique semi-transparent **23** est intercalé entre l'objectif **7** de la caméra **6** et la surface externe **3₁** de la paroi courbe. Selon cet exemple, l'écran diffuseur **13** rétro-éclairé est positionné de façon symétrique de la pupille d'entrée de l'objectif **7** de la caméra **6** par rapport au plan de l'élément optique semi-transparent **23.**

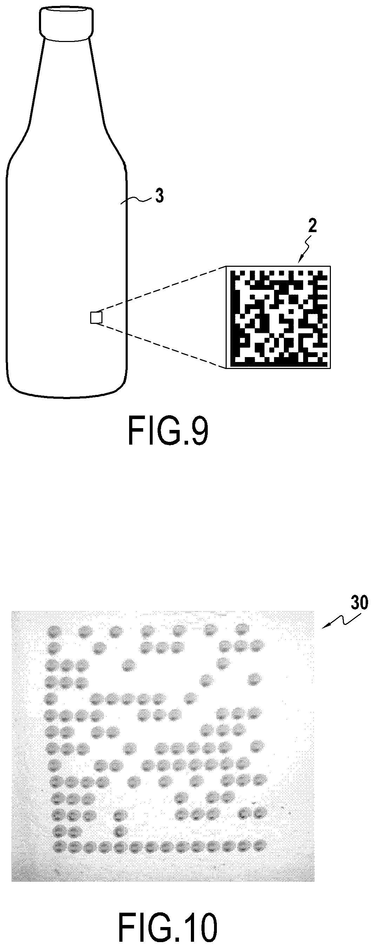

Il ressort de la description qui précède que le dispositif **1** conforme à l'invention permet d'acquérir dans de bonnes conditions, une marque **2** sur une paroi réfléchissante et transparente. Le dispositif **1** selon l'invention trouve une application particulièrement avantageuse pour lire une marque bidimensionnelle **2** tel un code matriciel réalisé sur la paroi **3** d'un récipient en verre comme cela apparaît à la **Fig. 9****.** De préférence, ce code matriciel est un code datamatrix réalisé sur un récipient à chaud, par une gravure laser. Le dispositif **1** selon l'invention permet d'acquérir comme illustré à la **Fig. 10****,** une image **30** de la surface du code **2** en superposition avec l'image virtuelle de la source lumineuse. Le fond de l'image **30** est clair car il est constitué par l'image de la source lumineuse réfléchie par la paroi. Les différents points du code **2** dévient la lumière et apparaissent noirs dans l'image **30.** La source lumineuse éclaire un secteur angulaire incluant le code complet et présente comme expliqué ci-avant, une homogénéité dans les deux directions à savoir parallèlement et perpendiculairement à l'axe vertical de l'article. Tel que cela ressort clairement de la **Fig. 10****,** l'image ainsi obtenu présente une bonne résolution.

Par ailleurs, un tel dispositif **1** présente un encombrement limité permettant soit sa réalisation sous la forme d'un élément portatif de lecture, soit son intégration facile sur une machine d'inspection en ligne d'objets. Il est à noter qu'il peut être prévu d'observer la marque **2** en faisant l'acquisition d'une seule image ou d'une série d'images successives lors d'un déplacement relatif par exemple en rotation entre la caméra et la paroi. Selon cette dernière variante, les images qui peuvent se chevaucher sont analysées ensemble pour la lecture de la marque **2.**

L'invention n'est pas limitée aux exemples décrits et représentés car diverses modifications peuvent y être apportées sans sortir de son cadre.

## Revendications

1. Procédé pour analyser à l'aide d'une source lumineuse **(5)** possédant une surface d'éclairage **(S),** et d'une caméra **(6)** présentant un axe optique d'observation **(A),** une marque **(2)** réalisée sur la surface externe (**3₁**) d'une paroi courbe **(3)** réalisée en un matériau translucide ou transparent, **caractérisé en ce qu'** :
- on réalise la source lumineuse étendue et uniforme de manière que :
. d'une part, l'étendue de l'image virtuelle (**S'**) de la surface d'éclairage **(S)** de la source lumineuse **(5)** recouvre complètement la surface de la marque **(2),**
. d'autre part, la luminance de l'image virtuelle **(S')** de la surface d'éclairage **(S)** de la source lumineuse **(5)** soit uniforme,
- et on observe la surface de la marque **(2)** en superposition avec la surface de l'image virtuelle **(S'),** de manière à permettre l'analyse de la marque **(2).**

2. Procédé selon la revendication 1, **caractérisé en ce qu'**il consiste à observer la surface de la marque **(2)** en faisant l'acquisition d'une image ou d'une série d'images prises lors d'un déplacement relatif entre la caméra et la paroi.

3. Procédé selon la revendication 1, **caractérisé en ce qu'**il consiste à adapter l'étendue de l'image virtuelle **(S')** de la surface d'éclairage **(S)** de la source lumineuse **(5)** à la courbure de la paroi courbe **(3).**

4. Dispositif pour analyser une marque **(2)** réalisée sur la surface externe **(3₁)** d'une paroi courbe **(3)** réalisée en un matériau translucide ou transparent, le dispositif comportant :
- une source lumineuse **(5)** possédant une surface d'éclairage **(S),**
- et une caméra **(6)** munie d'un objectif **(7)** dont l'axe optique d'observation **(A)** est sensiblement perpendiculaire à la surface externe **(3₁)** de la paroi courbe,
**caractérisé en ce que** :
- la source lumineuse **(5)** possède une surface d'éclairage uniforme et étendue **(S)** telle que :
l'étendue de l'image virtuelle **(S')** de la surface d'éclairage **(S)** de la source lumineuse**(5)** recouvre complètement la surface de la marque **(2),**
. la luminance de l'image virtuelle **(S')** de la surface d'éclairage **(S)** de la source lumineuse **(5)** est uniforme,
- et la caméra **(6)** est adaptée pour acquérir l'image de la surface de la marque **(2),** en superposition avec la surface de l'image virtuelle **(S').**

5. Dispositif selon la revendication 4, **caractérisé en ce que** la source lumineuse **(5)** comporte un écran diffuseur rétro-éclairé **(13)** qui se trouve décalé, par rapport à l'objectif **(7)** de la caméra **(6).**

6. Dispositif selon la revendication 5, **caractérisé en ce qu'**un élément optique de déviation **(11)** est placé devant l'objectif **(7)** de la caméra **(6).**

7. Dispositif selon la revendication 4 ou 5, **caractérisé en ce que** l'écran diffuseur **(13)** est prolongé, de part et d'autre, par des miroirs **(17)** positionnés en vis-à-vis l'un de l'autre.

8. Dispositif selon la revendication 7, **caractérisé en ce que** l'écran diffuseur **(13)** est prolongé par un miroir **(19)** s'étendant dans un plan sensiblement perpendiculaire aux plans d'extension des miroirs **(17)** et de l'écran diffuseur **(13).**

9. Dispositif selon la revendication 5, **caractérisé en ce qu'**il comprend entre l'écran diffuseur **(13)** et la paroi courbe, un élément optique **(21)** adapté pour former l'image du plan de la surface de la source dans le plan de la pupille de l'objectif **(7)** de la caméra **(6).**

10. Dispositif selon la revendication 4, **caractérisé en ce qu'**il comporte un élément optique semi-transparent **(23)** intercalé entre l'objectif **(7)** de la caméra **(6)** et la paroi courbe, un écran diffuseur **(13)** étant positionné de façon symétrique de la pupille d'entrée de l'objectif **(7)** de la caméra **(6),** par rapport au plan de l'élément optique semi-transparent **(23).**

11. Dispositif selon la revendication 4, **caractérisé en ce que** la marque **(2)** est un marquage obtenu par laser.

## Patentansprüche

1. Verfahren zum Analysieren einer Kennzeichnung (2), die auf der Außenfläche (3₁) einer aus einem durchscheinenden oder transparenten Material gefertigten gekrümmten Wand (3) ausgebildet ist, mit Hilfe einer Lichtquelle (5), welche eine Beleuchtungsfläche (S) besitzt, und einer Kamera (6), welche eine optische Betrachtungsachse (A) aufweist, **dadurch gekennzeichnet, dass**:
- die Lichtquelle ausgedehnt und gleichmäßig ausgeführt wird, so dass:
• einerseits die Ausdehnung des virtuellen Bildes (S') der Beleuchtungsfläche (S) der Lichtquelle (5) die Oberfläche der Kennzeichnung (2) vollständig bedeckt,
• andererseits die Leuchtdichte des virtuellen Bildes (S') der Beleuchtungsfläche (S) der Lichtquelle (5) gleichmäßig ist, und
- die Oberfläche der Kennzeichnung (2) in Überlagerung mit der Fläche des virtuellen Bildes (S') betrachtet wird, um die Analyse der Kennzeichnung (2) zu ermöglichen.

2. Verfahren nach Anspruch 1, **dadurch gekennzeichnet, dass** es darin besteht, die Oberfläche der Kennzeichnung (2) durch die Aufnahme eines Bildes oder einer Reihe von Bildern, die während einer Relativbewegung zwischen der Kamera und der Wand aufgenommen werden, zu betrachten.

3. Verfahren nach Anspruch 1, **dadurch gekennzeichnet, dass** es darin besteht, die Ausdehnung des virtuellen Bildes (S') der Beleuchtungsfläche (S) der Lichtquelle (5) an die Krümmung der gekrümmten Wand (3) anzupassen.

4. Vorrichtung zum Analysieren einer Kennzeichnung (2), die auf der Außenfläche (3₁) einer aus einem durchscheinenden oder transparenten Material gefertigten gekrümmten Wand (3) ausgebildet ist, wobei die Vorrichtung umfasst:
- eine Lichtquelle (5), die eine Beleuchtungsfläche (S) besitzt, und
- eine Kamera (6), die mit einem Objektiv (7) ausgestattet ist, dessen optische Betrachtungsachse (A) zu der Außenfläche (3₁) der gekrümmten Wand im Wesentlichen senkrecht verläuft,
**dadurch gekennzeichnet, dass**:
- die Lichtquelle (5) eine gleichmäßige und ausgedehnte Beleuchtungsfläche (S) besitzt, derart, dass:
• die Ausdehnung des virtuellen Bildes (S') der Beleuchtungsfläche (S) der Lichtquelle (5) die Oberfläche der Kennzeichnung (2) vollständig bedeckt,
• die Leuchtdichte des virtuellen Bildes (S') der Befeuchtungsfläche (S) der Lichtquelle (5) gleichmäßig ist, und
- die Kamera (6) dazu ausgelegt ist, das Bild der Oberfläche der Kennzeichnung (2) in Überlagerung mit der Fläche des virtuellen Bildes (S') aufzunehmen.

5. Vorrichtung nach Anspruch 4, **dadurch gekennzeichnet, dass** die Lichtquelle (5) einen rückbeleuchteten Streuschirm (13) umfasst, der in Bezug auf das Objektiv (7) der Kamera (6) versetzt ist.

6. Vorrichtung nach Anspruch 5, **dadurch gekennzeichnet, dass** ein optisches Ablenkelement (11) vor dem Objektiv (7) der Kamera (6) angeordnet ist.

7. Vorrichtung nach Anspruch 4 oder 5, **dadurch gekennzeichnet, dass** der Streuschirm (13) auf beiden Seiten durch einander gegenüber angeordnete Spiegel (17) fortgesetzt ist.

8. Vorrichtung nach Anspruch 7, **dadurch gekennzeichnet, dass** der Streuschirm (13) durch einen Spiegel (19) fortgesetzt ist, der sich in einer zu den Erstreckungsebenen der Spiegel (17) und des Streuschirms (13) im Wesentlichen senkrechten Ebene erstreckt.

9. Vorrichtung nach Anspruch 5, **dadurch gekennzeichnet, dass** sie zwischen dem Streuschirm (13) und der gekrümmten Wand ein optisches Element (21) umfasst, das dazu ausgelegt ist, das Bild der Ebene der Oberfläche der Quelle in der Ebene der Pupille des Objektivs (7) der Kamera (6) zu bilden.

10. Vorrichtung nach Anspruch 4, **dadurch gekennzeichnet, dass** sie ein halbtransparentes optisches Element (23), das zwischen dem Objektiv (7) der Kamera (6) und der gekrümmten Wand eingefügt ist, umfasst, wobei ein Streuschirm (13) in Bezug auf die Ebene des halbtransparenten optischen Elements (23) zu der Eintrittspupille des Objektivs (7) der Kamera (6) symmetrisch angeordnet ist.

11. Vorrichtung nach Anspruch 4, **dadurch gekennzeichnet, dass** die Kennzeichnung (2) eine durch Laser erhaltene Markierung ist.

## Claims

1. A method of using a light source (5) possessing a lighting surface (S) and a camera (6) presenting an observation optical axis (A) to analyze a mark (2) made on the outside surface (3₁) of a curved wall (3) made of a material that is translucent or transparent, the method being **characterized by**:
- making the light source extensive and uniform in such a manner that:
• firstly the extent of the virtual image (S') of the lighting surface (S) of the light source (5) completely covers the surface of the mark (2); and
• the brightness of the virtual image (S') of the lighting surface (S) of the light source (5) is uniform; and
- observing the surface of the mark (2) superposed on the surface of the virtual image (S') so as to enable the mark (2) to be analyzed.

2. A method according to claim 1, **characterized in that** it consists in observing the surface of the mark (2) by acquiring an image or a series of images taken during relative movement between the camera and the wall.

3. A method according to claim 1, **characterized in that** it consists in adapting the extent of the virtual image (S') of the lighting surface (S) of the light source (5) to the curvature of the curved wall (3).

4. A device for analyzing a mark (2) made on the outside surface (3₁) of a curved wall (3) made of a material that is translucent or transparent, the device comprising:
- a light source (5) possessing a lighting surface (S); and
- a camera (6) provided with a lens (7) having an observation optical axis (A) that is substantially perpendicular to the outside surface (3₁) of the curved wall;
the device being **characterized in that**:
- the light source (5) possesses a lighting structure (S) that is uniform and extensive such that:
· the extent of the virtual image (S') of the lighting surface (S) of the light source completely covers the surface of the mark (2); and
· the brightness of the virtual image (S') of the lighting surface (S) of the light source (5) is uniform; and
- the camera (6) is adapted to acquire the image of the surface of the mark (2) superposed on the surface of the virtual image (S').

5. A device according to claim 4, **characterized in that** the light source (5) comprises a back-lit diffusing screen (13) that is offset relative to the lens (7) of the camera (6).

6. A device according to claim 5, **characterized in that** a deflector optical element (11) is placed in front of the lens (7) of the camera (6).

7. A device according to claim 4 or claim 5, **characterized in that** the diffusing screen (13) is extended on either side by mirrors (17) placed facing each other.

8. A device according to claim 7, **characterized in that** the diffusing screen (13) is extended by a mirror (19) extending in a plane that is substantially perpendicular to the planes in which the mirrors (17) and the diffusing screen (13) extend.

9. A device according to claim 5, **characterized in that** it includes an optical element (21) between the diffusing screen (13) and the curved wall, the optical element (21) being adapted to form an image of the plane of the surface of the source in the plane of the pupil of the lens (7) of the camera (6).

10. A device according to claim 4, **characterized in that** it includes a semitransparent optical element (23) interposed between the lens (7) of the camera (6) and the curved wall, a diffusing screen (13) being positioned symmetrically to the inlet pupil of the lens (7) of the camera (6) relative to the plane of the semitransparent optical element (23).

11. A device according to claim 4, **characterized in that** the mark (2) is marking obtained by laser.
